(19) **Europäisches Patentamt / European Patent Office / Office européen des brevets**

(11) **EP 3 434 733 B1**

(12) **EUROPEAN PATENT SPECIFICATION**

(45) Date of publication and mention
of the grant of the patent:
**17.06.2020 Bulletin 2020/25**

(21) Application number: **17770385.7**

(22) Date of filing: **23.03.2017**

(51) Int Cl.:
*C08L 65/00* (2006.01)    *C03C 27/12* (2006.01)
*C08J 5/00* (2006.01)    *C08K 3/22* (2006.01)
*C08K 5/103* (2006.01)    *C08L 53/02* (2006.01)
*B32B 17/10* (2006.01)

(86) International application number:
**PCT/JP2017/011875**

(87) International publication number:
**WO 2017/164345 (28.09.2017 Gazette 2017/39)**

(54) **THERMOPLASTIC RESIN COMPOSITION**

THERMOPLASTISCHE HARZZUSAMMENSETZUNG

COMPOSITION DE RÉSINE THERMOPLASTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2016 JP 2016062461**

(43) Date of publication of application:
**30.01.2019 Bulletin 2019/05**

(73) Proprietor: **Zeon Corporation
Tokyo 100-8246 (JP)**

(72) Inventors:
• **TAKAYAMA Yu**
**Izumi-shi**
**Osaka 594-1157 (JP)**
• **AKAMATSU Sayo**
**Izumi-shi**
**Osaka 594-1157 (JP)**
• **YASUDA Ryoji**
**Izumi-shi**
**Osaka 594-1157 (JP)**
• **HATAKEYAMA Junichi**
**Daito-shi**
**Osaka 574-0052 (JP)**

• **CHIBA Daido**
**Tokyo 100-8246 (JP)**
• **KAMIMURA Haruki**
**Tokyo 100-8246 (JP)**

(74) Representative: **Vos, Derk
Maiwald Patentanwalts- und
Rechtsanwaltsgesellschaft mbH
Elisenhof
Elisenstraße 3
80335 München (DE)**

(56) References cited:
**JP-A- H1 180 561    JP-A- S61 157 558
JP-A- 2000 053 846    JP-A- 2001 048 924
JP-A- 2001 233 643    JP-A- 2002 348 443
JP-A- 2008 247 619    JP-A- 2015 199 939**

• **DATABASE WPI Week 201719 Thomson
Scientific, London, GB; AN 2017-14911S
XP002793441, -& WO 2017/033968 A1 (ZEON
CORP) 2 March 2017 (2017-03-02) -& EP 3 342 821
A1 (ZEON CORP [JP]) 4 July 2018 (2018-07-04)**

**Description**

TECHNICAL FIELD

The present disclosure relates to thermoplastic resin compositions and shaped articles formed from the compositions used for windows or window parts for general buildings or vehicles.

BACKGROUND

Laminated glass which includes at least a pair of glass plates bonded together with an interlayer film has been used as window glass of automobiles, railroad vehicles, aircrafts, ships and buildings because it is safe with little scattering of small glass pieces even when broken by external impact. Examples of such laminated glass include those consisting of a laminated glass interlayer film made of plastic polyvinyl acetal resin, ethylene-vinyl acetate copolymer resin, ethylene-acryl copolymer resin, polyurethane resin or other resin interposed between at least a pair of glass plates.

However, such laminated glass has the problem of high transmittance of infrared rays and hence inferior heat shielding property while it is excellent in safety. Thus if it is possible for laminated glass to block infrared rays (heat rays), which have a large thermal effect, among incident light rays passing through the laminated glass, the heat shielding property improves and temperature rises inside the laminated glass can be suppressed.

PTL 1 discloses a laminated glass interlayer film obtained by dispersing heat shielding particles such as tin-doped indium oxide (ITO) particles or antimony-doped tin oxide (ATO) particles in plastic polyvinyl acetal resin. Laminated glass that includes such an interlayer film shows excellent heat shielding property and electromagnetic wave transmittance. However, the mixed presence of fine particles in the interlayer film of laminated glass generally results in increased haze. Methods have been proposed to prevent haze increases by reducing the particle size of fine particles. However, even when fine ITO particles having a particle size of 0.2 $\mu$m or less are to be dispersed in the interlayer film, failure to achieve sufficient dispersing undesirably results in increased haze values due to secondary aggregation of the particles.

Further, PTL 2 discloses that it is effective to mix a certain proportion of a higher fatty acid ester such as a polyglycerin fatty acid ester, a sorbitan fatty acid ester or a sucrose fatty acid ester as a dispersant when dispersing fine ITO particles in a plasticizer. However, even with such means, there are cases where fine ITO particles cannot be sufficiently dispersed and where the haze value increases particularly when fine ITO particles having both large and small particle sizes are present.

PTL 3 relates to a laminated glass containing an inter layer of a resin composition which has low haze value and good transparency while shielding heat. The said resin composition contains an ITO fine-particle-dispersion and a higher fatty acid ester such as a polyglyceryl fatty acid ester, which is used in the intermediate films of the laminated glass. As the polymer of the intermediate film, polyvinyl butyral or ethylene-vinyl acetate resins are used.

CITATION LIST

Patent Literature

PTL 1: JP2012240905A
PTL 2: JP2001233643A
PTL 3: JP2001233643A

SUMMARY

(Technical Problem)

An object of the present disclosure is therefore to provide thermoplastic resin compositions which have low haze and excellent transparency as well as sufficient heat ray shielding property and therefore are suitable for windows or window parts for general buildings or vehicles.

(Solution to Problem)

The present disclosure solves the foregoing problem by melt-kneading an alicyclic structure-containing polymer, an aqueous dispersion of a metal oxide in water, and a polyglycerin fatty acid ester.

(Advantageous Effect)

Thermoplastic resin compositions according to the present disclosure and shaped articles formed from the compositions have low haze and excellent transparency as well as sufficient heat ray shielding property and therefore can be used for window glass of general buildings, window glass of automobiles, roof materials such as arcades and carports, optical materials such as infrared cut filters, agricultural films, interlayer films of laminated glass, etc.

DETAILED DESCRIPTION

Embodiments of the present disclosure will now be described in detail, but the scope of the present disclosure shall not be limited to the embodiments. It should be appreciated that various modifications and alternations may be made without departing from the spirit and scope of the present disclosure.

The alicyclic structure-containing polymer constituting the thermoplastic resin composition of the present disclosure has an alicyclic structure in the main chain and/or the side chain. Examples of the alicyclic structure include saturated cyclic hydrocarbon (cycloalkane) structure and unsaturated cyclic hydrocarbon (cycloalkene) structure. Preferred are those having cycloalkane structure from the viewpoint of, for example, light resistance and thermal degradation resistance. The alicyclic structure can have any number of carbon atoms, but typically 4 or more and 20 or less, preferably 5 or more and 15 or less, and more preferably 5 or more and 12 or less. A balance is advantageously struck between, for example, heat resistance and thermal degradation resistance when the alicyclic structure has such numbers of carbon atoms.

The proportion of the alicyclic structure-containing repeat unit in the alicyclic structure-containing polymer used in the present disclosure can be determined as appropriate according to the intended purpose. It is typically 20% by weight or more, preferably 30% by weight or more, and more preferably 40% by weight or more. Excessively small proportions of the alicyclic structure-containing repeat unit in the alicyclic structure-containing polymer undesirably results in a shaped article having inferior heat resistance. The remainder of the alicyclic structure-containing polymer other than the alicyclic structure-containing repeat unit can have any structure and various monomer units can be used.

Specific examples of polymers having such alicyclic structure include (1) hydrogenated ring-opening metathesis polymers of norbornene monomers disclosed in JPH03109418A, JPH04170425A, etc.; (2) addition copolymers of norbornene monomers and vinyl compounds disclosed in JPS61292601A, JPS62252406A, JPS62252407A, etc.; 3) hydrogenated polymers of aromatic vinyl compounds disclosed in JPS64001706A, JPH01294753A, WO98/55886A, etc.; and (4) hydrogenated block copolymers of aromatic vinyl compounds and chain conjugated diene compounds disclosed in JPH01294721A, WO2000/32646A, JP2002540229A, JP2002370304A, WO2003/018656A, etc. Preferred among them are hydrogenated ring-opening metathesis polymers of norbornene monomers and hydrogenated copolymers of aromatic vinyl compounds and chain conjugated diene compounds from the viewpoint of heat resistance and moldability, with hydrogenated copolymers of aromatic vinyl compounds and chain conjugated diene compounds being more preferred from the viewpoint of light resistance.

Polyglycerin fatty acid esters used in the present disclosure contribute to improve the dispersibility of the metal oxide within the thermoplastic resin. While details of the effect of polyglycerin fatty acid esters remain uncertain, this effect is assumed to be derived from improved flow of the thermoplastic resin composition when melt-kneading the thermoplastic resin and aqueous dispersion of the metal oxide or improved affinity between the thermoplastic resin and metal oxide; improved wettability; and so forth.

The polyglycerin constituting the polyglycerin fatty acid ester according to the present disclosure is preferably a polyglycerin having an average degree of polymerization of 2 or more and 20 or less as calculated from the hydroxyl value, more preferably a polyglycerin having an average degree of polymerization of 4 or more and 10 or less. Specific examples of polyglycerins include diglycerin, triglycerin, tetraglycerin, hexaglycerin, and decaglycerin. Usable commercially available products include diglycerin S, polyglycerin #310, polyglycerin #500, and polyglycerin #750 (all manufactured by Sakamoto Yakuhin Kogyo Co., Ltd.). The average degree of polymerization refers to an average degree of polymerization (n) of a polyglycerin as calculated from the hydroxyl value determined by the terminal group analysis method. Specifically, the average degree of polymerization is calculated using the following Equations (1) and (2):

$$\text{(Equation 1): Molecular Weight} = 74n + 18$$

$$\text{(Equation 2): Hydroxyl Value} = 56110(n + 2)/\text{Molecular Weight}$$

The hydroxyl value in Equation (2) is a numerical value which serves as a measure of the number of hydroxyl groups contained in a polyglycerin and refers to the number of milligrams of potassium hydroxide required to neutralize acetic acid that is necessary for acetylating free hydroxyl groups contained in 1g of the polyglycerin. The number of milligrams of potassium hydroxide is calculated in accordance with "Standard Methods for the Analysis of Fats, Oils and Related Materials, edited by Japan Oil Chemists' Society, 2013."

For the polyglycerin having an average degree of polymerization of 2 or more and 20 or less as calculated from the hydroxyl value described above, except for diglycerin having an average degree of polymerization of 2, a composition having a molecular weight distribution is generally used. However, two or more different kinds of polyglycerins having different molecular weight distributions may be mixed, and polyglycerins having an average degree of polymerization of less than 2 or greater than 20 can also be used so long as the polyglycerin mixture has an average degree of polymerization of 2 or more and 20 or less as calculated from the hydroxyl value.

The fatty acid constituting the polyglycerin fatty acid ester used in the present disclosure is preferably at least one of saturated or unsaturated fatty acids having 2 or more and 22 or less carbon atoms, which may be either linear or branched. More preferred are those having 8 or more and 18 or less carbon atoms. Specific examples of fatty acids include acetic acid, propionic acid, butyric acid, caproic acid, caprylic acid, 2-ethylhexanoic acid, 3,5,5'-trimethylhexanoic acid, capric acid, lauric acid, myristic acid, palmitic acid, stearic acid, isostearic acid, oleic acid, behenic acid, and erucic acid. Preferred fatty acids include 2-ethylhexanoic acid, caprylic acid, capric acid, stearic acid, and oleic acid. Fatty acids used herein are not limited to these fatty acids and the fatty acids may be used alone or in combination.

The SP value (solubility parameter) of the polyglycerin fatty acid ester used in the present disclosure is preferably 8.0 $(cal/cm^3)^{1/2}$ or more and 15.0 $(cal/cm^3)^{1/2}$ or less, more preferably 9.5 $(cal/cm^3)^{1/2}$ or more and 14.0 $(cal/cm^3)^{1/2}$ or less. The solubility parameter herein can be calculated by the Fedors method described in "Polymer Engineering and Science, Vol.14, No.2, p.147-154 (1974)". The SP value can be expressed by the following equation:

$$\text{SP value } (\delta) = (\Delta H/V)^{1/2}$$

where $\Delta H$ represents molar heat of vaporization (cal) and V represents molar volume $(cm^3)$, with 1 (cal) being equivalent to 4.18605 (J). For $\Delta H$ and V, the sum of molar heats of vaporization ($\Delta H$) and the sum of molar volumes (V) of the groups of atoms described on pages 151-153 of the above-mentioned literature can be used, respectively. SP value is a measure that indicates that materials having close SP values are easy to mix with each other (highly compatible with each other) and materials having distant SP values are difficult to mix with each other. When the SP value of the polyglycerin fatty acid ester is 8.0 or more and 15.0 or less, it is highly compatible with the thermoplastic resin, leading to a lower haze value due to reduced bleeding over time or improved dispersibility of the metal oxide.

Specific examples of polyglycerin fatty acid esters used in the present disclosure include, but not limited to, diglycerin caprylate, diglycerin laurate, diglycerin-2-ethylhexanoate, diglycerin stearate, diglycerin oleate, diglycerin isostearate, diglycerin behenate, diglycerin erucate, tetraglycerin caprylate, tetraglycerin laurate, tetraglycerin-2-ethylhexanoate, tetraglycerin stearate, tetraglycerin oleate, tetraglycerin isostearate, tetraglycerin behenate, tetraglycerin erucate, hexaglycerin caprylate, hexaglycerin laurate, hexaglycerin-2-ethylhexanoate, hexaglycerin stearate, hexaglycerin oleate, hexaglycerin isostearate, hexaglycerin stearate, hexaglycerin oleate, hexaglycerin behenate, hexaglycerol erucate, decaglycerin caprylate, decaglycerin laurate, decaglycerin-2-ethylhexanoate, decaglycerin stearate, decaglycerin oleate, decaglycerin isostearate, decaglycerin stearate, decaglycerin oleate, decaglycerin behenate, and decaglycerin erucate. These polyglycerin fatty acid esters may be used alone or in combination.

Polyglycerin fatty acid esters used in the present disclosure can be synthesized by a known esterification reaction exemplified below. One non-limiting exemplary method involves adding an alkali catalyst such as sodium hydroxide to a polyglycerin and a fatty acid, followed by an esterification reaction under atmospheric or reduced pressure to sufficiently react the fatty acid and the polyglycerin until almost all of the added fatty acid is esterified and little free acid remains.

The blending amounts of the alicyclic structure-containing polymer and the polyglycerin fatty acid ester used in the present disclosure are preferably such that the polyglycerin fatty acid ester is blended in an amount of 0.01 parts by weight or more and 10 parts by weight or less, more preferably 0.02 parts by weight or more and 5 parts by weight or less, based on 100 parts by weight of the alicyclic structure-containing polymer. When the polyglycerin fatty acid ester is blended in an amount of less than 0.01 parts by weight, the dispersion stability of the metal oxide in the thermoplastic resin composition may decrease. On the other hand, when the blending amount exceeds 10 parts by weight, such problems as poor adhesion with glass due to resin degradation or bleed-out of additives may occur.

Metal oxides used in the present disclosure are not particularly limited as long as metal oxides having heat ray shielding property are used. Examples include tin-doped indium oxide, antimony-doped tin oxide, antimony-doped zinc oxide, aluminum-doped zinc oxide, indium-doped zinc oxide, gallium-doped zinc oxide, tungsten oxide, and cerium-tungsten composite oxide, with tin-doped indium oxide, antimony-doped tin oxide, and antimony-doped zinc oxide being preferred. These metal oxides may be used alone or in combination. Metal oxides used in the present disclosure preferably have a primary particle diameter of 80 nm or less, preferably 50 nm or less, as measured by the laser diffraction/scattering method.

The blending amounts of the alicyclic structure-containing polymer and the metal oxide used in the present disclosure are preferably such that the metal oxide is blended in an amount, in terms of solid content, of 0.05 parts by weight or more and 10 parts by weight or less, more preferably 0.1 parts by weight or more and 5 parts by weight or less, based on 100 parts by weight of the alicyclic structure-containing polymer. When the metal oxide is blended in an amount of less than 0.05 parts by weight in terms of solid content, it may result in failure to obtain heat ray shielding property. When the amount exceeds 10 parts by weight in terms of solid content, transparency of the thermoplastic resin composition and a shaped article formed from the composition may be compromised.

The metal oxide is dispersed in water for use as an aqueous dispersion. When the metal oxide is used in the powder form, the dispersibility of the metal oxide in the thermoplastic resin is insufficient to cause haze increases in some cases. For this reason, it is necessary to use the metal oxide in the form of an aqueous dispersion. The concentration of the metal oxide in the aqueous dispersion is preferably 1% by weight or more and 50% by weight or less.

The aqueous dispersion of the metal oxide may be in the form of liquid or solid, and in the case of solid form, any solid form can be used so long as the liquid property is recovered by vigorous stirring or shaking. It is preferred that the metal oxide has a volume-average particle diameter of 100 nm or less and a 90% cumulative particle diameter (D90) of 230 nm or less.

In the aqueous dispersion having a metal oxide concentration of 1% by weight or more and 50% by weight or less, the metal oxide has a volume-average particle diameter of 100 nm or less and a 90% cumulative particle diameter (D90) of 230 nm or less. The volume-average particle size can be measured and calculated by a particle size analyzer using the dynamic light scattering method. If a metal oxide having an average particle diameter exceeding 100 nm or D90 exceeding 230 nm is mixed with resin to produce a thermoplastic resin composition and a shaped article of the composition, they may have inferior transparency.

The thermoplastic resin composition of the present disclosure is prepared by melt-kneading an alicyclic structure-containing polymer, an aqueous dispersion of a metal oxide, and a polyglycerin fatty acid ester. Any kneading machine can be used for melt-kneading and examples include those known in the art, such as a twin-screw extruder, a kneader, a three-roll mill, a Banbury mixer, and an open roll. Upon kneading, the components may be melt-kneaded at a resin temperature of 120°C or higher, rapidly cooled to 100°C or lower, optionally pelletized, and then melt-extruded to prepare a shaped article. Alternatively, the components may be melted at a resin temperature of 120°C or higher, rapidly cooled to 100°C or lower, and directly formed into a shaped article such as a film. At a resin temperature of less than 120°C, the metal oxide may not be sufficiently dispersed to cause an increased haze value.

The thermoplastic resin composition of the present disclosure is prepared by melt-kneading at a temperature of 120°C or higher with an aqueous dispersion of a metal oxide blended. During melt-kneading, the water content in the thermoplastic resin composition does not necessarily become 0%; the water content derived from the aqueous dispersion of the metal oxide may remain in the thermoplastic resin composition.

Any method can be used to prepare a shaped article from the thermoplastic resin composition of the present disclosure. For example, any of injection molding, injection blow molding, injection compression molding, injection press, hot press, blow molding, extrusion molding of film or sheet, profile extrusion molding, thermoforming, and rotational molding can be applied. The shaped article can be of any shape according to the necessary, but preferably has a flat or curved plate-shaped portion. The shaped article can be of any thickness but should have a plate-shaped portion having a thickness of 0.2 mm or more and 10 mm or less. The thickness of the plate-shaped portion is preferably 1 mm or more and 10 mm or less.

The shaped article of the present disclosure has a plate-shaped portion having a thickness of 0.2 mm or more and 10 mm or less, wherein the plate-shaped portion has a haze of less than 10% and a spectral transmittance at 2,000 nm of less than 10.0%, preferably a haze of less than 5% and a spectral transmittance at 2,000 nm of less than 10.0%, and more preferably a haze of less than 5% and a spectral transmittance at 2,000 nm of less than 5.0%.

The thermoplastic resin composition of the present disclosure preferably further comprises an antioxidant. Any antioxidant can be used and examples include 2,6-di-tert-butyl-P-cresol (BHT) ("Sumilizer BHT", manufactured by Sumitomo Chemical Co., Ltd.) and tetrakis-[methylene-3-(3'-5'-di-t-butyl-4'-hydroxyphenyl)propionate]methane [Irganox 1010, manufactured by BASF]. These antioxidants may be used alone or in combination. The antioxidant can be added in any amount, but preferably 0.01 parts by weight or more and 5.0 parts by weight or less based on 100 parts by weight of the alicyclic structure-containing polymer.

The thermoplastic resin composition of the present disclosure preferably further comprises an ultraviolet absorber. Any ultraviolet absorber can be used and examples include benzotriazole-based compounds, benzophenone-based compounds, triazine-based compounds, and benzoate-based compounds.

Any benzotriazole-based compound can be used and examples include 2-(2'-hydroxy-5'-methylphenyl)benzotriazole [Tinuvin P manufactured by BASF], 2-(2'-hydroxy-3',5'-di-t-butylphenyl)benzotriazole [Tinuvin 320, manufactured by BASF], 2-(2'-hydroxy-3'-t-butyl-5'-methylphenyl)-5-chlorobenzotriazole [Tinuvin 326, manufactured by BASF], and 2-(2'-hydroxy-3',5'-di-aminophenyl)benzotriazole [Tinuvin 328, manufactured by BASF].

Any benzophenone-based compound can be used and examples include octabenzone [Chimassorb 81, manufactured by BASF]. Any triazine-based compound can be used and examples include 2-(4,6-diphenyl-1,3,5-triazin-2-yl)-5-[(hexyl)oxy]-phenol [Tinuvin 1577 FF, manufactured by BASF]. Any benzoate-based compound can be used and examples include 2,4-di-tert-butylphenyl-3,5-di-tert-butyl-4-hydroxybenzoate [Tinuvin 120, manufactured by BASF].

The ultraviolet absorber can be added in any amount but is preferably added in an amount of 0.01 parts by weight or more and 5.0 parts by weight or less based on 100 parts by weight of the alicyclic structure-containing polymer. If the amount is less than 0.01 parts by weight, the effect of ultraviolet absorption can hardly be obtained. If the amount exceeds 5.0 parts by weight, it may cause weather resistance reduction of the resin.

Thermoplastic resin compositions according to the present disclosure and shaped articles formed from the compositions may further comprise additives such as light stabilizers, surfactants, flame retardants, antistatic agents, moisture resistant agents, colorants, heat ray reflectors, and heat ray absorbers.

Thermoplastic resin compositions according to the present disclosure and shaped articles formed from the compositions can be used for, but not limited to, window glass of general buildings, window glass of automobiles, roof materials such as arcades and carports, optical materials such as infrared cut filters, agricultural films, interlayer films of laminated glass, etc.

EXAMPLES

The present disclosure will now be described in detail based on Examples. Measurements were made by the methods described below.

(Measurement of Haze)

The haze of the obtained shaped article was measured using a turbidimeter (HM-150, manufactured by Murakami Color Research Laboratory Co., Ltd.). Articles with a haze of less than 5.0% were ranked A as being excellent, those with a haze of 5.0% or more and less than 10.0% were ranked B as being good, and those with a haze of 10.0% or more were ranked C as being bad.

(Measurement of Spectral Transmittance)

Using a spectrophotometer ("U4100" manufactured by Hitachi High-Technologies Corporation), the spectral transmittance of the obtained shaped article was measured at 300 nm or more and 2,700 nm or less. The heat ray shielding property was evaluated based on the spectral transmittance at 2,000 nm. Articles with a spectral transmittance at 2,000 nm of less than 5.0% were ranked A as being excellent, those with a spectral transmittance at 2,000 nm of 5.0% or more and less than 10.0% was ranked B as being good, and those with a spectral transmittance at 2,000 nm of 10.0% or more were ranked C as being bad.

(Example 1)

To 100 parts by weight of alicyclic structure-containing polymer [M1] (hydrogenated ring-opening metathesis polymer of a norbornene monomer: product name "ZEONOR 1060R" (ZEONOR is a registered trademark in Japan, other countries, or both)), glass transition temperature = 100°C, manufactured by ZEON Corporation) were added 1.5 parts by weight of an ITO aqueous dispersion (ITO concentration: 20% by weight, manufactured by Mitsubishi Materials Corporation) and 0.06 parts by weight of decaglycerin monocaprylate ("MCA-750" manufactured by Sakamoto Yakuhin Kogyo Co., Ltd.) and thoroughly kneaded by a twin screw extruder to afford a thermoplastic resin composition. Next, a shaped article having a thickness of 2.00 mm was obtained using an injection molding machine.

(Examples 2 to 5)

Thermoplastic resin compositions and shaped articles were obtained as in Example 1 except that the amounts of decaglycerin monocaprylate and ITO aqueous dispersion used in Example 1 were changed.

(Comparative Example 1)

To 100 parts by weight of the same alicyclic structure-containing polymer [M1] as used in Example 1 was added 1.5 parts by weight of an ITO aqueous dispersion (ITO concentration: 20% by weight, manufactured by Mitsubishi Materials Corporation) and thoroughly kneaded by a twin screw extruder to afford a thermoplastic resin composition. Next, a shaped article having a thickness of 2.00 mm was obtained using an injection molding machine.

The shaped articles obtained in Examples 1 to 5 and Comparative Example 1 were measured for haze and spectral transmittance. The results are set forth in Table 1.

Table 1

| | | | | Ex. 1 | Ex. 2 | Ex. 3 | Ex. 4 | Ex. 5 | Comp. Ex. 1 |
|---|---|---|---|---|---|---|---|---|---|
| Components | (A) | | Alicyclic structure-containing polymer [M1] | 100 | 100 | 100 | 100 | 100 | 100 |
| | | | Polyvinyl butyral resin | | | | | | |
| | (B) | | Tin-doped indium oxide aqueous dispersion[*1] values in parentheses represent amounts in terms of solid content | 1.5 (0.3) | 1.5 (0.3) | 1.5 (0.3) | 2.0 (0.4) | 2.5 (0.5) | 1.5 (0.3) |
| | | | Antimony composite oxide colloid aqueous dispersion[*2] | | | | | | |
| | (C) | | Decaglycerin monocaprylate[*3] (SP value: 14.2) | 0.06 | 0.12 | 0.18 | 0.06 | 0.06 | |
| | | | Decaglycerin monolaurate[*4] (SP value: 13.7) | | | | | | |
| | | | Decaglycerin monostearate[*5] (SP value: 13.4) | | | | | | |
| | | | Diglycerin monooleate[*6] (SP value: 10.9) | | | | | | |
| | | | Tetraglycerin monooleate[*7] (SP value: 11.6) | | | | | | |
| | | | Hexaglycerin monooleate[*8] (SP value: 11.6) | | | | | | |
| | | | Hexaglycerin pentaoleate[*9] (SP value: 10.4) | | | | | | |
| | | | Decaglycerin monooleate[*10] (SP value: 12.9) | | | | | | |
| | | | Decaglycerin dacaoleate[*11] (SP value: 9.3) | | | | | | |
| | | | Phosphate compound[*12] | | | | | | |
| | | | Sodium polycarboxylate[*13] (40% solid content) | | | | | | |
| | | | Polyoxyalkylene alkyl phenyl ether phosphate | | | | | | |
| Haze | | Thickness: 2.00 mm | | B | B | B | B | B | C |
| Spectral transmittance | | Thickness: 2.00 mm Wavelength: 2,000 nm | | B | A | A | A | A | A |

[*1] Manufactured by Mitsubishi Materials Corporation
[*2] CELNAX CX-Z330H (manufactured by Nissan Chemical Corporation)
[*3] MCA-750 (manufactured by Sakamoto Yakuhin Kogyo Co., Ltd.)
[*4] ML-750 (manufactured by Sakamoto Yakuhin Kogyo Co., Ltd.)
[*5] S-1001P (manufactured by Sakamoto Yakuhin Kogyo Co., Ltd.)
[*6] MO-150 (manufactured by Sakamoto Yakuhin Kogyo Co., Ltd.)
[*7] MO-3S (manufactured by Sakamoto Yakuhin Kogyo Co., Ltd.)
[*8] MO-5S (manufactured by Sakamoto Yakuhin Kogyo Co., Ltd.)
[*9] PO-5S (manufactured by Sakamoto Yakuhin Kogyo Co., Ltd.)
[*10] MO-7S (manufactured by Sakamoto Yakuhin Kogyo Co., Ltd.)
[*11] DAO-7S (manufactured by Sakamoto Yakuhin Kogyo Co., Ltd.)
[*12] Disperbyk-102 (manufactured by BYK Japan KK)
[*13] Aron A-6330 (manufactured by Toagosei Co., Ltd.)

(Example 6)

To 100 parts by weight of alicyclic structure-containing polymer [M2] (weight-average molecular weight Mw of a hydrogenated styrene-isoprene-styrene block copolymer is 60,000; the ratio of styrene to isoprene is 50:50 by weight; and the hydrogenation rate of carbon-carbon unsaturated bonds in the main chain and side chain and the hydrogenation rate of carbon-carbon unsaturated bonds of the aromatic ring are 100%) were added 1.5 parts by weight of an ITO aqueous dispersion (ITO concentration: 20% by weight, manufactured by Mitsubishi Materials Corporation) and 0.03 parts by weight of decaglycerin monocaprylate ("MCA-750" manufactured by Sakamoto Yakuhin Kogyo Co., Ltd.) and thoroughly kneaded by a twin screw extruder to afford a thermoplastic resin composition. Next, a shaped article having a thickness of 1.00 mm was obtained using an injection molding machine.

(Example 7)

A thermoplastic resin composition and a shaped article were obtained as in Example 6 except that the amount of decaglycerin monocaprylate used in Example 6 was changed.

(Example 8)

To 100 parts by weight of the alicyclic structure-containing polymer [M2] were added 1.5 parts by weight of an ITO aqueous dispersion (ITO concentration: 20% by weight, manufactured by Mitsubishi Materials Corporation) and 0.03 parts by weight of decaglycerin monolaurate ("ML-750" manufactured by Sakamoto Yakuhin Kogyo Co., Ltd.) and thoroughly kneaded by a twin screw extruder. Thereafter, a shaped article having a thickness of 1.00 mm was obtained using an injection molding machine.

(Example 9)

A thermoplastic resin composition and a shaped article were obtained as in Example 8 except that the amount of decaglycerin monolaurate used in Example 8 was changed.

(Example 10)

To 100 parts by weight of the alicyclic structure-containing polymer [M2] were added 1.5 parts by weight of an ITO aqueous dispersion (ITO concentration: 20% by weight, manufactured by Mitsubishi Materials Corporation) and 0.10 parts by weight of decaglycerin monostearate ("S-1001P" manufactured by Sakamoto Yakuhin Kogyo Co., Ltd.) and thoroughly kneaded by a twin screw extruder. Thereafter, a shaped article having a thickness of 1.00 mm was obtained using an injection molding machine.

(Example 11)

To 100 parts by weight of the alicyclic structure-containing polymer [M2] were added 1.5 parts by weight of an ITO aqueous dispersion (ITO concentration: 20% by weight, manufactured by Mitsubishi Materials Corporation) and 0.10 parts by weight of diglycerin monooleate ("MO-150" manufactured by Sakamoto Yakuhin Kogyo Co., Ltd.) and thoroughly kneaded by a twin screw extruder. Thereafter, a shaped article having a thickness of 1.00 mm was obtained using an injection molding machine.

(Example 12)

To 100 parts by weight of the alicyclic structure-containing polymer [M2] were added 1.5 parts by weight of an ITO aqueous dispersion (ITO concentration: 20% by weight, manufactured by Mitsubishi Materials Corporation) and 0.10 parts by weight of tetraglycerin monooleate ("MO-3S" manufactured by Sakamoto Yakuhin Kogyo Co., Ltd.) and thoroughly kneaded by a twin screw extruder. Thereafter, a shaped article having a thickness of 1.00 mm was obtained using an injection molding machine.

(Example 13)

To 100 parts by weight of the alicyclic structure-containing polymer [M2] were added 1.5 parts by weight of an ITO aqueous dispersion (ITO concentration: 20% by weight, manufactured by Mitsubishi Materials Corporation) and 0.10 parts by weight of hexaglycerin monooleate ("MO-5S" manufactured by Sakamoto Yakuhin Kogyo Co., Ltd.) and thoroughly kneaded by a twin screw extruder. Thereafter, a shaped article having a thickness of 1.00 mm was obtained using an injection molding machine.

(Example 14)

A thermoplastic resin composition and a shaped article were obtained as in Example 13 except that the amount of hexaglycerin monooleate used in Example 13 was changed.

(Example 15)

To 100 parts by weight of the alicyclic structure-containing polymer [M2] were added 1.5 parts by weight of an ITO aqueous dispersion (ITO concentration: 20% by weight, manufactured by Mitsubishi Materials Corporation) and 0.10 parts by weight of hexaglycerin pentaoleate ("PO-5S" manufactured by Sakamoto Yakuhin Kogyo Co., Ltd.) and thoroughly kneaded by a twin screw extruder. Thereafter, a shaped article having a thickness of 1.00 mm was obtained using an injection molding machine.

(Example 16)

To 100 parts by weight of the alicyclic structure-containing polymer [M2] were added 1.5 parts by weight of an ITO aqueous dispersion (ITO concentration: 20% by weight, manufactured by Mitsubishi Materials Corporation) and 0.10 parts by weight of decaglycerin monooleate ("MO-7S" manufactured by Sakamoto Yakuhin Kogyo Co., Ltd.) and thoroughly kneaded by a twin screw extruder. Thereafter, a shaped article having a thickness of 1.00 mm was obtained using an injection molding machine.

(Example 17)

A thermoplastic resin composition and a shaped article were obtained as in Example 16 except that the amount of decaglycerin monooleate used in Example 16 was changed.

(Example 18)

To 100 parts by weight of the alicyclic structure-containing polymer [M2] were added 1.5 parts by weight of an ITO aqueous dispersion (ITO concentration: 20% by weight, manufactured by Mitsubishi Materials Corporation) and 0.10 parts by weight of decaglycerin decaoleate ("DAO-7S" manufactured by Sakamoto Yakuhin Kogyo Co., Ltd.) and thoroughly kneaded by a twin screw extruder. Thereafter, a shaped article having a thickness of 1.00 mm was obtained using an injection molding machine.

(Example 19)

To 100 parts by weight of the alicyclic structure-containing polymer [M2] were added 0.5 parts by weight of an antimony composite oxide colloid aqueous dispersion (antimony composite oxide colloid concentration: 30% by weight, "CELNAX CX-Z330H" manufactured by Nissan Chemical Corporation) and 0.06 parts by weight of decaglycerin monocaprylate ("MCA-750" manufactured by Sakamoto Yakuhin Kogyo Co., Ltd.) and thoroughly kneaded by a twin screw extruder. Thereafter, a shaped article having a thickness of 1.00 mm was obtained using an injection molding machine.

(Comparative Example 2)

After a thermoplastic resin composition was obtained by the same method as in Comparative Example 1, a shaped article having a thickness of 1.00 mm was obtained using an injection molding machine.

(Comparative Example 3)

To 100 parts by weight of the alicyclic structure-containing polymer [M2] were added 1.5 parts by weight of an ITO aqueous dispersion (ITO concentration: 20% by weight, manufactured by Mitsubishi Materials Corporation) and 0.06 parts by weight of phosphate compound ("Disperbyk-102" manufactured by BYK Japan KK) and thoroughly kneaded by a twin screw extruder. Thereafter, a shaped article having a thickness of 1.00 mm was obtained using an injection molding machine.

(Comparative Example 4)

To 100 parts by weight of the alicyclic structure-containing polymer [M2] were added 1.5 parts by weight of an ITO aqueous dispersion (ITO concentration: 20% by weight, manufactured by Mitsubishi Materials Corporation) and 0.15 parts by weight of sodium polycarboxylate ("Aron A-6330" manufactured by Toagosei Co., Ltd.) and thoroughly kneaded by a twin screw extruder. Thereafter, a shaped article having a thickness of 1.00 mm was obtained using an injection molding machine.

(Comparative Example 5)

To 100 parts by weight of the alicyclic structure-containing polymer [M2] were added 1.5 parts by weight of an ITO aqueous dispersion (ITO concentration: 20% by weight, manufactured by Mitsubishi Materials Corporation) and 0.06 parts by weight of polyoxyalkylene alkyl phenyl ether phosphate and thoroughly kneaded by a twin screw extruder. Thereafter, a shaped article having a thickness of 1.00 mm was obtained using an injection molding machine.

(Comparative Example 6)

To 100 parts by weight of the alicyclic structure-containing polymer [M2] was added 1.5 parts by weight of an antimony composite oxide colloid aqueous dispersion (antimony composite oxide colloid concentration: 30% by weight, "CELNAX CX-Z330H" manufactured by Nissan Chemical Corporation) and thoroughly kneaded by a twin screw extruder. Thereafter, a shaped article having a thickness of 1.00 mm was obtained using an injection molding machine.

The shaped articles obtained in Examples 6 to 19 and Comparative Examples 2 to 6 were measured for haze and spectral transmittance. The results are set forth in Tables 2 and 3.

Table 2

| | | | | Ex. 6 | Ex. 7 | Ex. 8 | Ex. 9 | Ex. 10 | Ex. 11 | Ex. 12 | Ex. 13 | Ex. 14 | Ex. 15 | Ex. 16 | Ex. 17 | Ex. 18 | Ex. 19 |
|---|---|---|---|---|---|---|---|---|---|---|---|---|---|---|---|---|---|
| Components | | (A) | Alicyclic structure-containing polymer [M2] | 100 | 100 | 100 | 100 | 100 | 100 | 100 | 100 | 100 | 100 | 100 | 100 | 100 | 100 |
| | | | Polyvinyl butyral resin | | | | | | | | | | | | | | |
| | | (B) | Tin-doped indium oxide aqueous dispersion*1 values in parentheses represent amounts in terms of solid content | 1.5 (0.3) | 1.5 (0.3) | 1.5 (0.3) | 1.5 (0.3) | 1.5 (0.3) | 1.5 (0.3) | 1.5 (0.3) | 1.5 (0.3) | 1.5 (0.3) | 1.5 (0.3) | 1.5 (0.3) | 1.5 (0.3) | 1.5 (0.3) | |
| | | | Antimony composite oxide colloid aqueous dispersion*2 values in parentheses represent amounts in terms of solid content | | | | | | | | | | | | | | 1.5 (0.3) |
| | | (C) | Decaglycerin monocaprylate*3 (SP value: 14.2) | 0.03 | 0.06 | | | | | | | | | | | | 0.06 |
| | | | Decaglycerin monolaurate*4 (SP value: 13.7) | | | 0.03 | 0.06 | | | | | | | | | | |
| | | | Decaglycerin monostearate*5 (SP value: 13.4) | | | | | 0.10 | | | | | | | | | |
| | | | Diglycerin monooleate*6 (SP value: 10.9) | | | | | | 0.10 | | | | | | | | |
| | | | Tetraglycerin monooleate*7 (SP value: 11.6) | | | | | | | 0.10 | | | | | | | |
| | | | Hexaglycerin monooleate*8 (SP value: 11.6) | | | | | | | | 0.10 | 0.15 | | | | | |
| | | | Hexaglycerin pentaoleate*9 (SP value: 10.4) | | | | | | | | | | 0.10 | | | | |
| | | | Decaglycerin monooleate*10 (SP value: 12.9) | | | | | | | | | | | 0.10 | 0.15 | | |
| | | | Decaglycerin dacaoleate*11 (SP value: 9.3) | | | | | | | | | | | | | 0.10 | |
| | | | Phosphate compound*12 | | | | | | | | | | | | | | |
| | | | Sodium polycarboxylate*13 (40% solid content) | | | | | | | | | | | | | | |
| | | | Polyoxyalkylene alkyl phenyl ether phosphate | | | | | | | | | | | | | | |
| Haze | Thickness: 1.00 mm | | | B | B | B | A | A | B | B | A | A | B | A | A | B | B |
| Spectral transmittance | Thickness: 1.00 mm Wavelength: 2,000 nm | | | A | B | B | B | A | B | B | A | A | A | A | A | B | B |

*1 Manufactured by Mitsubishi Materials Corporation

*2 CELNAX CX-Z330H (manufactured by Nissan Chemical Corporation)

*3 MCA-750 (manufactured by Sakamoto Yakuhin Kogyo Co., Ltd.)

*4 ML-750 (manufactured by Sakamoto Yakuhin Kogyo Co., Ltd.)

*5 S-1001P (manufactured by Sakamoto Yakuhin Kogyo Co., Ltd.)

*6 MO-150 (manufactured by Sakamoto Yakuhin Kogyo Co., Ltd.)

*7 MO-3S (manufactured by Sakamoto Yakuhin Kogyo Co., Ltd.)

*8 MO-5S (manufactured by Sakamoto Yakuhin Kogyo Co., Ltd.)

*9 PO-5S (manufactured by Sakamoto Yakuhin Kogyo Co., Ltd.)

*10 MO-7S (manufactured by Sakamoto Yakuhin Kogyo Co., Ltd.)

*11 DAO-7S (manufactured by Sakamoto Yakuhin Kogyo Co., Ltd.)

*12 Disperbyk-102 (manufactured by BYK Japan KK)

*13 Aron A-6330 (manufactured by Toagosei Co., Ltd.)

Table 3

| Components | | | | Comp. Ex. 2 | Comp. Ex. 3 | Comp. Ex. 4 | Comp. Ex. 5 | Comp. Ex. 6 |
|---|---|---|---|---|---|---|---|---|
| | (A) | | Alicyclic structure-containing polymer [M2] | 100 | 100 | 100 | 100 | 100 |
| | | | Polyvinyl butyral resin | | | | | |
| | (B) | | Tin-doped indium oxide aqueous dispersion*1 values in parentheses represent amounts in terms of solid content | 1.5 (0.3) | 1.5 (0.3) | 1.5 (0.3) | 1.5 (0.3) | |
| | | | Antimony composite oxide colloid aqueous dispersion*2 values in parentheses represent amounts in terms of solid content | | | | | 1.5 (0.3) |
| | (C) | | Decaglycerin monocaprylate*3 (SP value: 14.2) | | | | | |
| | | | Decaglycerin monolaurate*4 (SP value: 13.7) | | | | | |
| | | | Decaglycerin monostearate*5 (SP value: 13.4) | | | | | |
| | | | Diglycerin monooleate*6 (SP value: 10.9) | | | | | |
| | | | Tetraglycerin monooleate*7 (SP value: 11.6) | | | | | |
| | | | Hexaglycerin monooleate*8 (SP value: 11.6) | | | | | |
| | | | Hexaglycerin pentaoleate*9 (SP value: 10.4) | | | | | |
| | | | Decaglycerin monooleate*10 (SP value: 12.9) | | | | | |
| | | | Decaglycerin dacaoleate*11 (SP value: 9.3) | | | | | |
| | | | Phosphate compound*12 | | 0.06 | | | |
| | | | Sodium polycarboxylate*13 (40% solid content) | | | 0.15 | | |
| | | | Polyoxyalkylene alkyl phenyl ether phosphate | | | | 0.06 | |
| Haze | Thickness: 1.00 mm | | | C | C | C | C | C |
| Spectral transmittance | Thickness: 1.00 mm Wavelength: 2,000 nm | | | A | C | B | C | B |

*1 Manufactured by Mitsubishi Materials Corporation
*2 CELNAX CX-Z330H (manufactured by Nissan Chemical Corporation)
*3 MCA-750 (manufactured by Sakamoto Yakuhin Kogyo Co., Ltd.)
*4 ML-750 (manufactured by Sakamoto Yakuhin Kogyo Co., Ltd.)
*5 S-1001P (manufactured by Sakamoto Yakuhin Kogyo Co., Ltd.)
*6 MO-150 (manufactured by Sakamoto Yakuhin Kogyo Co., Ltd.)
*7 MO-3S (manufactured by Sakamoto Yakuhin Kogyo Co., Ltd.)

*8 MO-5S (manufactured by Sakamoto Yakuhin Kogyo Co., Ltd.)
*9 PO-5S (manufactured by Sakamoto Yakuhin Kogyo Co., Ltd.)
*10 MO-7S (manufactured by Sakamoto Yakuhin Kogyo Co., Ltd.)
*11 DAO-7S (manufactured by Sakamoto Yakuhin Kogyo Co., Ltd.)
*12 Disperbyk-102 (manufactured by BYK Japan KK)
*13 Aron A-6330 (manufactured by Toagosei Co., Ltd.)

(Example 20)

To 100 parts by weight of the alicyclic structure-containing polymer [M1] were added 1.5 parts by weight of an ITO aqueous dispersion (ITO concentration: 20% by weight, manufactured by Mitsubishi Materials Corporation) and 0.06 parts by weight of decaglycerin monocaprylate ("MCA-750" manufactured by Sakamoto Yakuhin Kogyo Co., Ltd.) and thoroughly kneaded by a twin screw extruder. Thereafter, shaped articles having a thickness of 1.00 mm and 2.00 mm, respectively, were obtained using an injection molding machine.

(Comparative Example 7)

To 100 parts by weight of polyvinyl butyral resin were added 1.5 parts by weight of an ITO aqueous dispersion (ITO concentration: 20% by weight, manufactured by Mitsubishi Materials Corporation) and 0.06 parts by weight of decaglycerin monocaprylate ("MCA-750" manufactured by Sakamoto Yakuhin Kogyo Co., Ltd.) and thoroughly kneaded by a twin screw extruder. Thereafter, shaped articles having a thickness of 1.00 mm and 2.00 mm, respectively, were obtained using an injection molding machine.
The shaped articles obtained in Example 20 and Comparative Example 7 were measured for haze and spectral transmittance. The results are set forth in Table 4.

## Table 4

| | | | Ex. 20 | Comp. Ex. 7 |
|---|---|---|---|---|
| Components | (A) | Alicyclic structure-containing polymer [M1] | 100 | |
| | | Polyvinyl butyral resin | | 100 |
| | (B) | Tin-doped indium oxide aqueous dispersion*1 values in parentheses represent amounts in terms of solid content | 1.5 (0.3) | 1.5 (0.3) |
| | | Antimony composite oxide colloid aqueous dispersion*2 | | |
| | (C) | Decaglycerin monocaprylate*3 (SP value: 14.2) | 0.06 | 0.06 |
| | | Decaglycerin monolaurate*4 (SP value: 13.7) | | |
| | | Decaglycerin monostearate*5 (SP value: 13.4) | | |
| | | Diglycerin monooleate*6 (SP value: 10.9) | | |
| | | Tetraglycerin monooleate*7 (SP value: 11.6) | | |
| | | Hexaglycerin monooleate*8 (SP value: 11.6) | | |
| | | Hexaglycerin pentaoleate*9 (SP value: 10.4) | | |
| | | Decaglycerin monooleate*10 (SP value: 12.9) | | |
| | | Decaglycerin dacaoleate*11 (SP value: 9.3) | | |
| | | Phosphate compound*12 | | |
| | | Sodium polycarboxylate*13 (40% solid content) | | |
| | | Polyoxyalkylene alkyl phenyl ether phosphate | | |
| Haze | Thickness: 1.00 mm | | B | C |
| | Thickness: 2.00 mm | | B | C |
| Spectral transmittance | Thickness: 1.00 mm Wavelength: 2,000 nm | | B | B |

*1 Manufactured by Mitsubishi Materials Corporation
*2 CELNAX CX-Z330H (manufactured by Nissan Chemical Corporation)
*3 MCA-750 (manufactured by Sakamoto Yakuhin Kogyo Co., Ltd.)
*4 ML-750 (manufactured by Sakamoto Yakuhin Kogyo Co., Ltd.)
*5 S-1001P (manufactured by Sakamoto Yakuhin Kogyo Co., Ltd.)
*6 MO-150 (manufactured by Sakamoto Yakuhin Kogyo Co., Ltd.)
*7 MO-3S (manufactured by Sakamoto Yakuhin Kogyo Co., Ltd.)
*8 MO-5S (manufactured by Sakamoto Yakuhin Kogyo Co., Ltd.)
*9 PO-5S (manufactured by Sakamoto Yakuhin Kogyo Co., Ltd.)
*10 MO-7S (manufactured by Sakamoto Yakuhin Kogyo Co., Ltd.)
*11 DAO-7S (manufactured by Sakamoto Yakuhin Kogyo Co., Ltd.)
*12 Disperbyk-102 (manufactured by BYK Japan KK)
*13 Aron A-6330 (manufactured by Toagosei Co., Ltd.)

It was revealed that Examples 1 to 20 exhibited higher transparency than Comparative Examples 1, 2 and 6 as well as heat ray shielding property. Comparative Examples 3 to 5 and 7 exhibited poor dispersibility of metal oxide in the thermoplastic resin composition and therefore reduced transparency. These results reveal that melt-kneading of an alicyclic structure-containing polymer, an aqueous dispersion of a metal oxide, and a polyglycerin fatty acid ester can provide a thermoplastic resin composition having low haze and excellent transparency as well as sufficient heat ray shielding ability.

INDUSTRIAL APPLICABILITY

Thermoplastic resin compositions having heat ray shielding property according to the present disclosure and shaped articles formed from the compositions have low haze and excellent transparency and therefore can be suitably used for windows or window parts for general buildings or vehicles, particularly as heat shielding interlayer films and heat shielding laminated glass.

**Claims**

1.  A thermoplastic resin composition obtainable by blending an alicyclic structure-containing polymer, an aqueous dispersion of a metal oxide, and a polyglycerin fatty acid ester.

2.  The thermoplastic resin composition according to claim 1, wherein the alicyclic structure-containing polymer is a saturated hydrocarbon polymer.

3.  The thermoplastic resin composition according to claim 1 or 2, wherein the alicyclic structure-containing polymer is a norbornene polymer or a hydrogenated product thereof.

4. The thermoplastic resin composition according to claim 1 or 2, wherein the alicyclic structure-containing polymer is a hydrogenated block copolymer of an aromatic vinyl compound and a chain conjugated diene compound.

5. The thermoplastic resin composition according to any one of claims 1 to 4, wherein the polyglycerin fatty acid ester is a polyglycerin fatty acid ester composed of a polyglycerin having an average degree of polymerization of 2 or more and 20 or less and of at least one of saturated or unsaturated fatty acids having 2 or more and 22 or less carbon atoms.

6. The thermoplastic resin composition according to any one of claims 1 to 5, wherein the polyglycerin fatty acid ester is contained in an amount of 0.01 parts by weight or more and 10 parts by weight or less based on 100 parts by weight of the alicyclic structure-containing polymer.

7. A shaped article obtainable by shaping the thermoplastic resin composition according to any one of claims 1 to 6, wherein the shaped article has a plate-shaped portion having a thickness of 0.2 mm or more and 10 mm or less, the plate-shaped portion having a haze of less than 10% and a spectral transmittance at 2,000 nm of less than 10.0%.

8. The shaped article according to claim 7, wherein the shaped article is a window or a window part for a general building or a vehicle.

9. Laminated glass comprising the shaped article according to claim 7 or 8.

10. A method of producing the thermoplastic resin composition according to any one of claims 1 to 6, wherein the thermoplastic resin composition is obtainable by melt-kneading.


**Patentansprüche**

1. Thermoplastische Harzzusammensetzung erhältlich durch Mischen eines eine alicyclische Struktur enthaltenden Polymers, einer wässrigen Dispersion eines Metalloxids und eines Polyglycerinfettsäureesters.

2. Thermoplastische Harzzusammensetzung gemäß Anspruch 1, wobei das eine alicyclische Struktur enthaltende Polymer ein gesättigtes Kohlenwasserstoffpolymer ist.

3. Thermoplastische Harzzusammensetzung gemäß Anspruch 1 oder 2, wobei das eine alicyclische Struktur enthaltende Polymer ein Norbornenpolymer oder ein hydriertes Produkt davon ist.

4. Thermoplastische Harzzusammensetzung gemäß Anspruch 1 oder 2, wobei das eine alicyclische Struktur enthaltende Polymer ein hydriertes Blockcopolymer einer aromatischen Vinylverbindung und einer kettenkonjugierten Dienverbindung ist.

5. Thermoplastische Harzzusammensetzung gemäß einem der Ansprüche 1 bis 4, wobei der Polyglycerinfettsäureester ein Polyglycerinfettsäureester ist, der aus einem Polyglycerin mit einem durchschnittlichen Polymerisationsgrad von 2 oder mehr und 20 oder weniger und mindestens einem von gesättigten oder ungesättigten Fettsäuren mit 2 oder mehr und 22 oder weniger Kohlenstoffatomen zusammengesetzt ist.

6. Thermoplastische Harzzusammensetzung gemäß einem der Ansprüche 1 bis 5, wobei der Polyglycerinfettsäureester in einer Menge von 0,01 Gewichtsteilen oder mehr und 10 Gewichtsteilen oder weniger, bezogen auf 100 Gewichtsteile des eine alicyclische Struktur enthaltenden Polymers, enthalten ist.

7. Geformter Gegenstand erhältlich durch Formen der thermoplastischen Harzzusammensetzung gemäß einem der Ansprüche 1 bis 6, wobei der geformte Gegenstand einen plattenförmigen Abschnitt mit einer Dicke von 0,2 mm oder mehr und 10 mm oder weniger aufweist, wobei der plattenförmige Abschnitt eine Trübung von weniger als 10 % und eine spektrale Durchlässigkeit bei 2000 nm von weniger als 10,0 % aufweist.

8. Geformter Gegenstand gemäß Anspruch 7, wobei der geformte Gegenstand ein Fenster oder ein Fensterteil für ein allgemeines Gebäude oder ein Fahrzeug ist.

9. Verbundglas umfassend den geformten Gegenstand gemäß Anspruch 7 oder 8.

**10.** Verfahren zur Herstellung der thermoplastischen Harzzusammensetzung gemäß einem der Ansprüche 1 bis 6, wobei die thermoplastische Harzzusammensetzung durch Schmelzkneten erhältlich ist.

**Revendications**

**1.** Composition de résine thermoplastique pouvant être obtenue par mélange d'un polymère contenant une structure alicyclique, d'une dispersion aqueuse d'un oxyde métallique, et d'un ester d'acide gras et de polyglycérol.

**2.** Composition de résine thermoplastique selon la revendication 1, dans laquelle le polymère contenant une structure alicyclique est un polymère hydrocarboné saturé.

**3.** Composition de résine thermoplastique selon la revendication 1 ou 2, dans laquelle le polymère contenant une structure alicyclique est un polymère de norbornène ou un produit hydrogéné de celui-ci.

**4.** Composition de résine thermoplastique selon la revendication 1 ou 2, dans laquelle le polymère contenant une structure alicyclique est un copolymère séquencé hydrogéné d'un composé vinylaromatique et d'un composé de diène conjugué à chaîne.

**5.** Composition de résine thermoplastique selon l'une quelconque des revendications 1 à 4, dans laquelle l'ester d'acide gras et de polyglycérol est un ester d'acide gras et de polyglycérol composé d'un polyglycérol ayant un degré moyen de polymérisation de 2 ou plus et de 20 ou moins et d'au moins un acide gras saturé ou insaturé ayant 2 ou plus et 22 ou moins atomes de carbone.

**6.** Composition de résine thermoplastique selon l'une quelconque des revendications 1 à 5, dans laquelle l'ester d'acide gras et de polyglycérol est contenu en une quantité de 0,01 partie en poids ou plus et de 10 parties en poids ou moins pour 100 parties en poids du polymère contenant une structure alicyclique.

**7.** Article façonné pouvant être obtenu par façonnage de la composition de résine thermoplastique de l'une quelconque des revendications 1 à 6, lequel article façonné a une partie en forme de plaque ayant une épaisseur de 0,2 mm ou plus et de 10 mm ou moins, la partie en forme de plaque ayant une turbidité inférieure à 10 % et un facteur spectral de transmission à 2000 nm inférieur à 10,0 %.

**8.** Article façonné selon la revendication 7, lequel article façonné est une fenêtre ou une partie de fenêtre pour un bâtiment en général ou un véhicule.

**9.** Verre feuilleté comprenant l'article façonné de la revendication 7 ou 8.

**10.** Procédé de production de la composition de résine thermoplastique de l'une quelconque des revendications 1 à 6, dans lequel la composition de résine thermoplastique peut être obtenue par malaxage à l'état fondu.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012240905 A
- JP 2001233643 A
- JP H03109418 A
- JP H04170425 A
- JP S61292601 A
- JP S62252406 A
- JP S62252407 A
- JP S64001706 A
- JP H01294753 A
- WO 9855886 A
- JP H01294721 A
- WO 200032646 A
- JP 2002540229 A
- JP 2002370304 A
- WO 2003018656 A

**Non-patent literature cited in the description**

- Standard Methods for the Analysis of Fats, Oils and Related Materials. 2013
- *Polymer Engineering and Science,* 1974, vol. 14 (2), 147-154